# EUROPEAN PATENT APPLICATION

(11) **EP 2 230 434 A1**
(43) Date of publication of application: **22.09.2010**
(21) Application number: 09702930.0
(22) Date of filing: 09.01.2009
(51) Int. Cl.: F16L 19/08, F25B 41/00

(54) **BITE TYPE PIPE CONNECTION STRUCTURE, VALVE, BITE TYPE PIPE JOINT, AND FREEZING APPARATUS**

(30) Priority: 17.01.2008 JP 2008008318; 09.10.2008 JP 2008262979
(71) Applicant: Daikin Industries, Ltd., Osaka 530-8323 (JP)
(72) Inventor: NAKATA, Haruo, Sakai-shi Osaka 591-8511 (JP); KITAGAWA, Takeshi, Sakai-shi Osaka 591-8511 (JP); SHIMAMURA, Takashi, Sakai-shi Osaka 591-8511 (JP)
(74) Representative: HOFFMANN EITLE
(86) International application number: PCT/JP2009/050176
(87) International publication number: WO 2009/090910

(57) **Abstract**

A bite type pipe connection structure according to the present invention includes a first joint body, a first coupling member, and a first ferrule. The first joint body is attached to an interconnecting device. The first coupling member is screwed to the first joint body. The first ferrule is tightly held between the first joint body and the first coupling member. A diameter difference adjusting portion that has a first end and a second end is provided. The first end is connected to the first joint body, and the second end is connected to a different-diameter pipe having a diameter different from the outer diameter of the standard pipe. The different-diameter pipe is connected to the first joint body via the diameter difference adjusting portion.

## Description

### TECHNICAL FIELD

The present invention relates to a bite type pipe connection structure capable of connecting pipes having different outer diameters, and a valve, a pipe joint and a freezing apparatus that use the bite type pipe connection structure.

### BACKGROUND ART

A pipe connection structure used, for example, in a pipe joint portion of a valve or a pipe joint is normally configured to connect standard pipes having a predetermined outer diameter of standard specifications to each other. However, when piping on site of an apparatus having the above described pipe connection structure needs to be performed, standard pipes are not available in some countries because of the difference between inch-based standards and metric standards. In such a case, a pipe having an outer diameter different from the outer diameter of a standard pipe, that is, a different-diameter pipe needs to be connected to the pipe connection structure. Such apparatuses includes separate type air conditioners. In a separate type air conditioner, a communication pipe needs to be provided between an indoor unit and an outdoor unit. However, due to the difference in piping standards between the country of manufacture of the air conditioner and the country in which the air conditioner is used, standard pipes are not always available. Conventionally, to solve the above problem, flare type pipe joints are used. For example, Patent Document 1 discloses a connection structure for connecting a different-diameter pipe in a multi-split type air conditioner. This connection structure can be also employed for connecting a different-diameter pipe of different standards.
Patent Document 1: Japanese Patent No. 2629546

### DISCLOSURE OF THE INTENTION

However, although bite type pipe joints, which have been researched in recent years, are used in the field of air conditioners, structures that allow different-diameter pipes to be connected to a bite type pipe connection structure have not been sufficiently researched.

The present invention has been made under such circumstances, and the objective thereof is to provide a bite type pipe connection structure for connecting a standard pipe having a predetermined outer diameter of standard specifications, which pipe connection structure is capable of connecting a different-diameter pipe having a diameter different from that of a standard pipe. It is another objective of the present invention to provide a valve, a pipe joint, and a freezing apparatus that use such a bite type pipe connection structure.

To achieve the foregoing objective, a bite type pipe connection structure according to the present invention is a bite type pipe connection structure for connecting a standard pipe, which pipe connection structure includes a first joint body, a first coupling member, and a first ferrule. The first joint body is attached to an interconnecting device, to which a pipe is connected. The first coupling member is screwed to the first joint body, while being fitted about a standard pipe having a predetermined outer diameter of standard specifications. The first ferrule is tightly held between the first joint body and the first coupling member and bites into the standard pipe. The pipe connection structure is characterized by a diameter difference adjusting portion that has a first end and a second end. The first end is connected to the first joint body, and the second end is connected to a different-diameter pipe having a diameter different from the outer diameter of the standard pipe. The different-diameter pipe is connected to the first joint body via the diameter difference adjusting portion.

This configuration allows a different-diameter pipe having an outer diameter different from the outer diameter of a standard pipe to be connected, via a different diameter connecting portion, to a bite type pipe connection structure for connecting a standard pipe having a predetermined outer diameter of standard specifications. In order to allow pipes having different outer diameters to be connected, the specifications of the bite type pipe connection structure may be changed for each pipe having a different diameter. However, this increases the number of product types and increases costs. In this respect, the present invention provides a diameter difference adjusting portion that allows pipes of different diameters to be connected to a product that has a bite type pipe connection structure of the same specifications. Thus, the configuration of the present invention is practical and reduces costs.

The diameter difference adjusting portion may have a diameter changing portion that increases or decreases the outer diameter of the second end of the different-diameter pipe so that it matches with the outer diameter of a standard pipe. In this case, it is sufficient to connect the diameter changing portion having the same diameter as the standard pipe formed at the end of the different-diameter pipe to the bite type pipe connection structure, which is installed in the interconnecting device in advance. The diameter changing portion can thus be connected in the same manner as when the standard pipe is connected.

In this case, the first coupling member preferably includes a first pipe connecting portion screwed to the first joint body and a first gripping portion grippable with a fastening tool. The first pipe connecting portion is preferably integrated with the first gripping portion. When the fastening of the first coupling member is complete, the first gripping portion is preferably separated from the first pipe connecting portion by rotational torque acting on the first gripping portion through the fastening tool. Specifically, the first pipe connecting portion and the first gripping portion may be machined as a single component. In this case, when fastening of the first joint body and the first coupling member is complete, the rotational torque acting on the first gripping portion cuts the coupling portion. Alternatively, separately machined first pipe connecting and first gripping portions may be integrated through adhesion with adhesive, fitting, or engagement with an engaging mechanism such as screws. In this case, these components are treated as an integral component when the fastening of the first coupling member is started. When the fastening of the first joint body and the first coupling member is complete, the rotational torque acting on the first gripping portion separates the adhered parts, disengages the engaging mechanism, or destroys the engaging mechanism, so that the components are separated from each other. According to this configuration, the connected portion cannot be easily loosened after the different-diameter pipe is connected to the bite type pipe connection structure via the diameter difference adjusting portion. This effectively prevents leakage.

The diameter changing portion preferably has such a length that the diameter changing portion passes through the first coupling member in a state where the different-diameter pipe is connected. In this case, after the pipe connection is complete, the separated first gripping portion is held at the diameter changing portion with little clearance. Therefore, the separated first gripping portion can be held on the diameter changing portion with little vibration or movement. This prevents noise from being generated by vibration and movement of the separated first gripping portion.

The diameter difference adjusting portion may include the standard pipe having a predetermined length and a bite type pipe joint for connecting a different-diameter pipe, which pipe joint is connected to a pipe of standard size. The bite type pipe joint for connecting a different-diameter pipe may include a second joint body attached to the standard pipe, a second coupling member for a different-diameter pipe, and a second ferrule for a different-diameter pipe. The second coupling member is screwed to the second joint body while being fitted about the different-diameter pipe. The second ferrule is tightly held between the second joint body and the second coupling member and bites into the different-diameter pipe. This configuration allows the different-diameter pipe to be connected by connecting the standard pipe to the bite type pipe connection structure, which is installed in the interconnecting device in advance, and connecting the bite type pipe joint for connecting a different-diameter pipe to the standard pipe. In this case, it is sufficient to prepare two components, which are the standard pipe having a predetermined length and the bite type pipe joint for connecting a different-diameter pipe. Since these members are multipurpose parts, the manufacture costs are reduced, and the parts of the diameter difference adjusting portion are readily available.

In this case, the second coupling member preferably includes a second pipe connecting portion screwed to the second joint body and a second gripping portion grippable with a fastening tool. The second pipe connecting portion is preferably integrated with the second gripping portion. When the fastening of the second coupling member is complete, the second gripping portion is preferably separated from the second pipe connecting portion by rotational torque acting on the second gripping portion through the fastening tool. According to this configuration, the second gripping portion is separated from the second pipe connecting portion when the fastening is complete. Therefore, in the bite type pipe joint for connecting a different-diameter pipe, the fastened portion cannot be easily loosened after the pipe connection is complete. The standard pipe is directly connected to the base portion of the second joint body, and the different-diameter pipe is connected to the base portion of the second joint body via the fastened second pipe connecting portion. Thus, even if the second joint body is grippable with a common fastening tool, the second joint body cannot be easily rotated to loosen the connected portion of the standard pipe and the different-diameter pipe.

In the above bite type pipe connection structure, an outer circumference of the second joint body may be shaped to be grippable with a fastening tool. This allows the second joint body and the second gripping portion to be gripped with a common fastening tool to fasten the second couponing member, and thus facilitates the fastening of the second coupling member.

Instead of shaping the outer circumference of the second joint body to be grippable with a fastening tool, the outer circumference of the second joint body may be substantially cylindrical over the entire length in the axial direction. In this case, the outer circumference of the second joint body can be held with a pipe wrench, and the second coupling member can be gripped and fastened with a common fastening tool. Since the outer circumference of the second joint body is substantially cylindrical, the second joint body cannot be held with a common fastening tool after the different-diameter pipe is connected. Thus, compared to the above described case, the connected portion of the standard pipe and the different-diameter pipe is harder to loosen.

In this case, two parallel surfaces, which are grippable with a fastening tool, may be formed in opposite parts of the outer circumference of the second joint body. Since the parallel surfaces can be inconspicuously formed on the outer circumference of the second joint body, the second joint body gives the impression that it cannot be gripped with a common fastening tool. However, an expert who is well aware of the structure can grip the second joint body at the parallel surfaces with a common fastening tool.

The first coupling member preferably includes a first pipe connecting portion screwed to the first joint body and a first gripping portion grippable with a fastening tool. The first pipe connecting portion is preferably integrated with the first gripping portion. When the fastening of the first coupling member is complete, the first gripping portion is preferably separated from the first pipe connecting portion by rotational torque acting on the first gripping portion through the fastening tool. Even in the bite type pipe connection structure for connecting a standard pipe, the connected portion cannot be loosened once the standard pipe is connected to the bite type pipe connection structure. Thus, coupled with the fact that the connected portion cannot be loosened in the bite type pipe connection structure for connecting a different-diameter pipe, leakage is further effectively prevented.

In place of the above configuration, the following configuration may be employed in which the diameter difference adjusting portion includes an adapter, a second coupling member for a different-diameter pipe, and a second ferrule. The adapter is screwed to the first joint body. The second coupling member is screwed to the adapter while being fitted about the different-diameter pipe. The second ferrule is tightly held between the adapter and the second coupling member and bites into the different-diameter pipe. The first joint body has a first cam surface that contacts the distal portion of the first ferrule. The adapter includes an intermediate tapered surface, a first intermediate thread portion, an intermediate insertion port, an intermediate cam surface, and a second intermediate thread portion. The intermediate tapered surface contacts the first cam surface. The first intermediate thread portion has a thread screwed to the first joint body. The intermediate insertion port receives a different-diameter pipe. The intermediate cam surface contacts the second ferrule. The second intermediate thread portion has a thread screwed to the second joint body. This configuration allows the adapter to be connected to the bite type pipe connection structure for connecting a standard pipe, which pipe connection structure is installed in an interconnecting device, and a different-diameter pipe can be connected to the adapter using the second coupling member and the second ferrule. A number of types of different-diameter pipes can be connected by changing the specification of the adapter.

In this case, the second coupling member preferably includes a second pipe connecting portion screwed to the adapter and a second gripping portion grippable with a fastening tool. The second pipe connecting portion is preferably integrated with the second gripping portion. When the fastening of the second coupling member is complete, the second gripping portion is preferably separated from the second pipe connecting portion by rotational torque acting on the second gripping portion through the fastening tool. Accordingly, since the second gripping portion and the second connecting portion are separated from each other, the connected portion of the different-diameter pipe cannot be loosened after the different-diameter pipe is connected to the bite type pipe connection structure. Since the second pipe connecting portion and the different-diameter pipe are connected to the adapter, the fastened portion of the first coupling member and the adapter is hard to loosen even if the adapter is grippable with a common fastening tool.

In the above bite type pipe connection structure, the adapter may include an internal thread tubular portion. The internal thread tubular portion protrudes from the first joint body when screwed thereto and includes the second intermediate thread portion. The outer circumference of the internal thread tubular portion may be shaped to be grippable with a fastening tool. This allows the internal thread tubular portion of the adapter and the second gripping portion to be gripped with a common fastening tool to fasten the second couponing member, and thus facilitates the fastening of the second coupling member.

Instead of forming the internal thread tubular portion of the adapter to be grippable with a common fastening tool, the outer circumference of the internal thread tubular portion may be substantially cylindrical over the entire length in the axial direction of the internal thread tubular portion. In this case, the outer circumference of the internal thread tubular portion of the adapter can be held with a pipe wrench, and the gripping portion of the second coupling member can be held with a common fastening tool to fasten the second coupling member. Since the outer circumference of the internal thread tubular portion of the adapter is circular, the adapter cannot be gripped with a common fastening tool after a different-diameter pipe is connected. This reliably makes the fastened portion of the first joint body and the adapter harder to loosen than the above described case.

In this case, a two parallel surfaces, which can be gripped by a fastening tool, may be formed in a part of the outer circumference of the internal thread tubular portion. This allows the parallel surfaces to be inconspicuously formed on the outer circumference of the internal thread tubular portion of the adapter, which protrudes from the first joint body, so that the adapter gives the impression that it cannot be gripped with a common fastening tool. However, an expert who is well aware of the structure can grip the second joint body at the parallel surfaces with a common fastening tool.

The valve and the pipe joint according to the present invention are characterized by using as a pipe joint portion any of the above pipe connection structures. The freezing apparatus according to the present invention is characterized by using the valve or the bite type pipe joint in its refrigerant circuit. Since the valve, the bite type pipe joint, and the freezing apparatus using these have a diameter difference adjusting portion, a different-diameter pipe having a diameter different from a predetermined outer diameter of standard specifications can be connected to a bite type pipe connection structure.

### BRIEF DESCRIPTION OF THE DRAWINGS

Fig. 1 provides partial cross-sectional views of a bite type pipe joint according to a first embodiment of the present invention, in which Fig. 1(a) shows the state of the bite type pipe joint before being fastened, and Fig. 1(b) shows the state after completion of the fastening of the bite type pipe joint;
Fig. 2 provides plan views illustrating the outer shape of the bite type pipe joint, in which Fig. 2(a) shows the outer shape after completion of the fastening, and Fig. 2(b) shows the outer shape after the pipe connection is complete;
Fig. 3 is a perspective view showing a specialized tool for the bite type pipe joint;
Fig. 4 is a partial cross-sectional view illustrating a modification of the bite type pipe connection structure;
Fig. 5 provides plan views of a bite type pipe connection structure according to a second embodiment of the present invention, in which Fig. 5(a) shows the state of a bite type pipe joint for connecting a different-diameter pipe before being fastened, and Fig. 5(b) shows the state after connection of a different-diameter pipe is complete;
Fig. 6 is a side view illustrating a second joint body in the bite type pipe joint for connecting a different-diameter pipe, as viewed from a side at which a different-diameter pipe is connected;
Fig. 7 is a partial cross-sectional view taken along line 7-7, showing the state of the bite type pipe joint for connecting a different-diameter pipe before being fastened;
Fig. 8 is a partial cross-sectional view taken along line 7-7, showing the state after the fastening of the bite type pipe joint for connecting a different-diameter pipe is complete;
Fig. 9 provides plan views of a bite type pipe connection structure according to a third embodiment of the present invention, in which Fig. 9(a) shows the state when the fastening of the bite type pipe connection structure is complete, and Fig. 9(b) shows the state after the connection of the bite type pipe connection structure is complete;
Fig. 10 provides partial cross-sectional views of the bite type pipe connection structure, in which Fig. 10(a) shows the state of the bite type pipe joint before being fastened, and Fig. 10(b) shows the state after the fastening of the bite type pipe joint is complete;
Fig. 11 is a partial cross-sectional view illustrating the state of a bite type pipe connection structure according to a fourth embodiment of the present invention before being fastened;
Fig. 12 is a cross-sectional view taken along line 12-12 of Fig. 11;
Fig. 13 is a partial cross-sectional view of a bite type pipe joint according to a modification, illustrating the state which fastening is started;
Fig. 14 is a cross-sectional view of the bite type pipe joint, showing the state in which the first ferrule is temporarily fixed to a first coupling member; and
Fig. 15 is a partial cross-sectional view illustrating the state in which the fastening of the bite type pipe joint is complete.

### BEST MODE FOR CARRYING OUT THE INVENTION

### (First Embodiment)

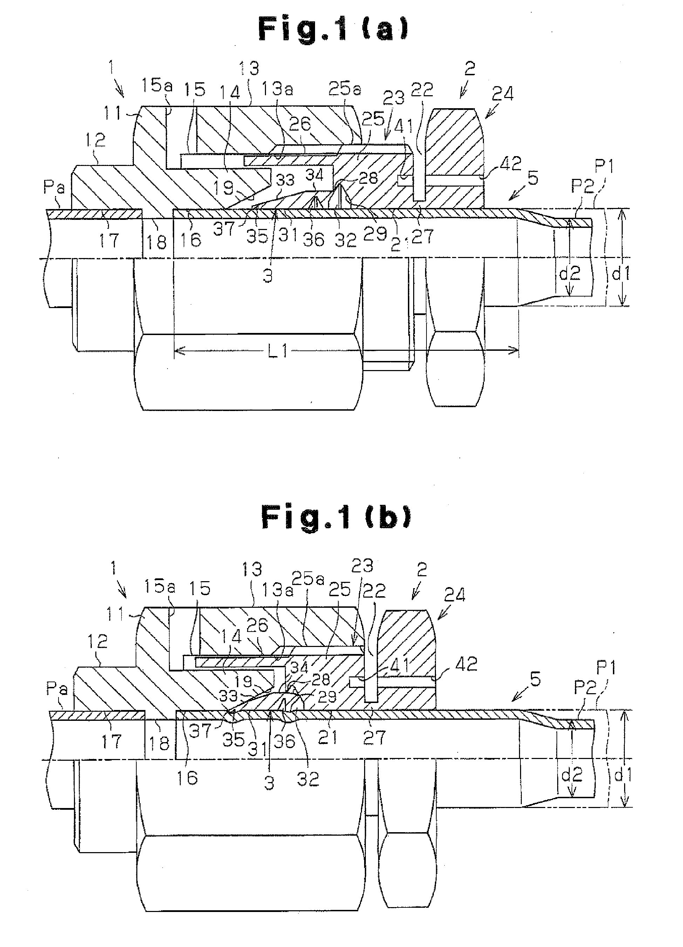

A bite type pipe connection structure according to a first embodiment of the present invention will now be described with reference to Figs. 1 to 4. The pipe connection structure of the present embodiment is used in a bite type pipe joint in a refrigerant circuit of a freezing apparatus such as an air conditioner or in a pipe joint portion in a stop valve for connecting a communication pipe placed between the indoor unit and the out door unit of a separate type air condition to the outdoor unit.

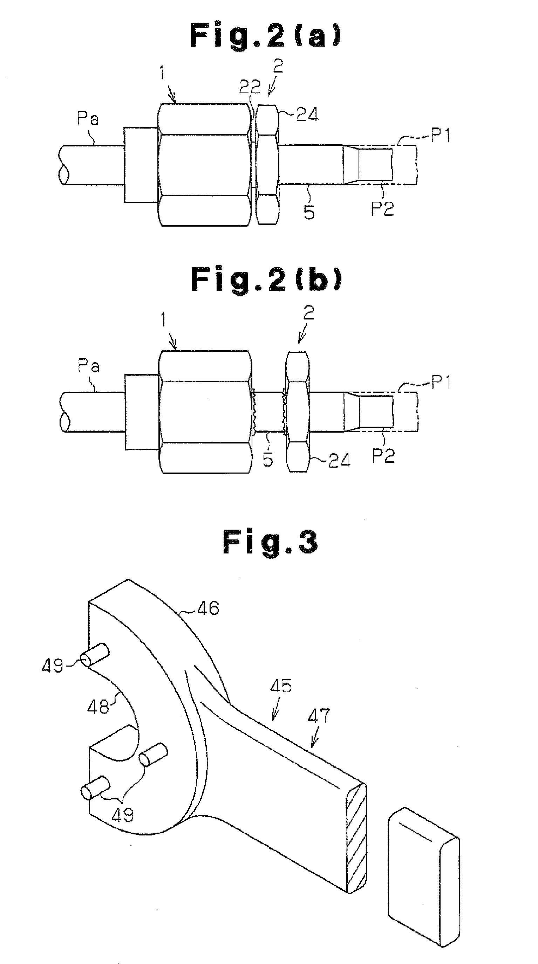

Fig. 1 provides partial cross-sectional views of a bite type pipe joint employing such a bite type pipe connection structure, in which Fig. 1(a) shows the state of the bite type pipe joint before being fastened, and Fig. 1(b) shows the state after completion of the fastening of the bite type pipe joint. Fig. 2 provides plan views illustrating the outer shape of the bite type pipe joint, in which Fig. 2(a) shows the outer shape after completion of the fastening, and Fig. 2(b) shows the outer shape after the pipe connection is complete. Fig. 3 is a perspective view showing a specialized tool used in the present embodiment.

The bite type pipe joint is designed to connect a standard pipe P1 having a predetermined diameter d1 conforming to standard specifications. As shown in Fig. 1 and 2, a different-diameter pipe P2 having an outer diameter d2, which is different from the outer diameter d1, is connected to the bite type pipe joint using a diameter difference adjusting portion. In Figs. 1 and 2, the standard pipe P1 is shown by alternate long and two short dashes lines, and the different-diameter pipe P2 is shown by solid lines. The outer diameter d2 of the different-diameter pipe P2 in Figs. 1 and 2 is smaller than the diameter d1 of the standard pipe P1. In the following description, the side corresponding to the first joint body discussed below, that is, left side in Fig. 1(a) is referred to as the front side, while the side corresponding to the first coupling member discussed below, that is, the right side in Fig. 1(a), is referred to as the rear side. The same applies to the other embodiments described below.

The bite type pipe joint for connecting the standard pipe P1 will now be described.

As shown in Fig. 1(a), the bite type pipe joint is formed by a first joint body 1, a first coupling member 2, and a first ferrule 3. The first joint body 1 is attached to a pipe Pa extending from an interconnecting device. The first coupling member 2 is fitted about the standard pipe P1 and fastened to the first joint body 1. The first ferrule 3 is integrally formed with the first coupling member 2.

The first joint body 1 has a base portion 11. A socket portion 12 is formed in a position forward of the base portion 11. An internal thread tubular portion 13 is formed in a position rearward of the outer circumference of the base portion 11. A shaft portion 14 is formed in a position rearward of the center of the base portion 11. The shaft portion 14 protrudes into the space inside the internal thread tubular portion 13. An internal thread 13a is formed on the inner circumferential surface of the internal thread tubular portion 13. The internal thread 13a serves as a thread portion screwed to the first coupling member 2. An annular space 15 is formed about the outer circumferential surface of the shaft portion 14. In the present embodiment, a protective cylinder 26 of the first coupling member 2, which will be discussed below, is accommodated in the annular space 15 when the first coupling member 2 is fastened. A vent hole 15a for preventing the interior of the annular space 15 from being frozen is formed at the base portion of the annular space 15.

The base portion 11 and the internal thread tubular portion 13 are integrally formed to have a hexagonal nut-like shape. A first insertion port 16 for receiving the standard pipe P1 is formed to extend along the center of the base portion 11 and the shaft portion 14, and an insertion port 17 for receiving the pipe Pa of the interconnecting device is formed to extend along the center of the base portion 11 and the socket portion 12. A communication hole and a step 18 are formed between the first insertion port 16 and the insertion port 17. The diameter of the communication hole is slightly smaller than those of the insertion ports 16, 17. The step 18 restricts the positions of the standard pipe P1 and the pipe Pa. More specifically, the step 18 contacts the distal portions of the standard pipe P1 and the pipe Pa, thereby restricting the forward movement of the standard pipe P1 and the rearward movement of the pipe Pa.

A first cam surface 19 for connecting the standard pipe P1 is formed at a rear part of the shaft portion 14, that is, at the inlet part of the first insertion port 16. A front portion of the first cam surface 19 is connected to the first insertion port 16. The first cam surface 19 is formed as a conical surface having a diameter in the transverse cross-section increases toward the rear end (toward the first coupling member).

A pipe through hole 21, through which the standard pipe P1 passes, is formed in the center of the first coupling member 2. A disk-shaped slit 22, which extends in a radial direction, is formed in the outer circumferential surface of the first coupling member 2. The first coupling member 2 is divided into two sections in the axial direction by the slit 22. A first pipe connecting portion 23, which is screwed to the first joint body 1, is formed in a position forward of the slit 22. The first pipe connecting portion 23 has a first pressing surface 29, which presses the first ferrule 3. A hexagonal nut-shaped first gripping portion 24 is formed behind the slit portion 22. The first gripping portion 24 is grippable with a common fastening tool. The slit 22 is arranged such that, in a state where the first coupling member 2 is fastened to the first joint body 1, the position of the slit 22 in the axial direction of the first coupling member 2 is substantially aligned with the position of the rear end of the first joint body 1 (refer to Fig. 1(b)).

The first pipe connecting portion 23 has a base portion 25. A protective cylinder 26 for protecting the outer circumferential surface of the first ferrule 3 is formed in a position forward of the base portion 25. An external thread portion 25a is formed on the outer circumference of the base portion 25. The external thread portion 25a serves as a thread portion that is screwed to the first joint body 1. The outer shape of the first gripping portion 24 is formed like a hexagonal nut so that it is grippable with a fastening tool. A thin tubular coupling portion 27 is formed between the slit 22 and the pipe through hole 21. The tubular coupling portion 27 couples the first pipe connecting portion 23 and the first gripping portion 24 to each other. The tubular coupling portion 27 is designed to have such a strength that it is cut when the rotational torque with which the first gripping portion 24 is fastened reaches a predetermined value (the value of the rotational torque when the fastening is complete).

Four engaging holes 41 are formed in the rear surface of the first pipe connecting portion 23. The engaging holes 41 are equally spaced in the circumference about the axis of the first pipe connecting portion 23, and serve as engaging portions that engage with engaging projections 49 (see Fig. 3) of a specialized tool 45, which will be discussed below. Four machining holes 42 are formed through the first gripping portion 24. The machining holes 42 are located at positions that face the engaging holes 41. The engaging holes 41 can be machined through the machining holes 42 from behind the first gripping portion 24.

The first ferrule 3 is formed to be annular and has an insertion hole 31 in the center. The standard pipe P1 is passed through the insertion hole 31. The rear end of the first ferrule 3 is coupled to the base portion 25 with a thin portion 28 extending in the radial direction of the first ferrule 3, so as to be integrated with the first coupling member 2. The thin portion 28 is formed to be cut when the torque with which the first coupling member 2 is fastened to the first joint body 1 reaches a predetermined value in a process of fastening the first joint body 1 and the first coupling member 2 to each other. A space 32 is formed between the first ferrule 3 and the base portion 25. Two annular surfaces, which are perpendicular to the axis of the first pipe connecting portion 23, are formed in a radially inner part of the space 32. Two inclined surfaces, which extend obliquely relative to the axis of the first pipe connecting portion 23, are formed in a radially outer part of the space 32. These two inclined surfaces are connected to each other, and a surface that is parallel to the axis of the first pipe connecting portion 23 is formed at the joint of the inclined surfaces.
The front end of the space 32 is the rear end face of the first ferrule 3, and the rear end of the space 32 is the front end face of the base portion 25. The rear one of the two inclined surfaces forms the first pressing surface 29.

The front end face of the first ferrule 3 is formed into a small surface perpendicular to the axis. A front part of the outer circumferential surface of the first ferrule 3 is formed into a thin tapered surface 33, and a rear part of the outer circumferential surface is formed into a cylindrical parallel surface 34, which is substantially parallel with the axis. The angle between the tapered surface 33 and the axis of the first pipe connecting portion 23 is smaller than the angle between the first cam surface 19 and the axis of the first pipe connecting portion 23. This allows the front part of the first ferrule 3 to be easily bent and increases the contact area between the first cam surface 19 and the tapered surface 33.

As shown in Fig. 1(a), the parallel surface 34 and the front surface of the thin portion 28 are perpendicular to each other. The connection between the parallel surface 34 and the thin portion 28 forms a rear edge portion. An incision is formed in the rear edge portion in a position corresponding to the front one of the inclined surfaces of the space 32. The incision allows stress to easily concentrate at the thin portion 28 when a force in the axial direction is applied to the first coupling member 2.

The first ferrule 3 has a first notch 35 and a second notch 36, which are incisions from the inner circumferential surface of the insertion hole 31 toward the outer circumference. The first notch 35 is formed in a position near the front end of the first ferrule 3, and the second notch 36 is formed in a position near the rear end in the axial direction. The first notch 35 facilitates deformation of a front end portion 37 located forward of the first notch 35. A cross-sectional shape of the first notch 35 along the axial direction of the first ferrule 3 is a right triangle. The intersection of the rear end face having the incision and the insertion hole 31 forms a front edge portion.

The second notch 36 is formed between the first notch 35 and the rear end face, in a position closer to the rear end face. The second notch 36 has two inclined surfaces that obliquely extend with respect to the axis of the first pipe connecting portion 23. At the joint of the two inclined surfaces, a surface that is parallel with the axis of the first pipe connecting portion 23 is formed. A thin portion is formed in the first ferrule 3 in a position between the second notch 36 and the outer circumferential surface of the first ferrule 3. The thin portion serves as a hinge to allow portions forward of and rearward of the thin portion to be easily bent toward the axis. This readily allows the tapered surface 33 in the front portion of the first ferrule 3 to closely contact the first cam surface 19, and the rear edge portion at the rear end face of the first ferrule 3 to easily bite into the reference pipe P1.

The pipe joint portion of the bite type pipe joint according to the present embodiment has the basic structure as described above. When the first coupling member 2 is fastened to the first joint body 1, the standard pipe P1 is connected. The pipe connection structure according to the present embodiment refers to such a pipe joint potion.

In the configuration described so far, the standard pipe P1 and the pipe Pa are formed by copper pipes, and the first coupling member 2 and the first ferrule 3 are made of a brass material. These materials are optimal for freezing apparatuses and have broad utility.

Next, a method for connecting the standard pipe P1 in the above described bite type pipe connection structure for connecting a standard pipe will be described.

Prior to connecting the first joint body 1 and the standard pipe P1 to each other, the first joint body 1 is attached to the pipe Pa, which serves as a connecting portion extending from the interconnecting device.

When the first joint body 1 and the standard pipe P1 are connected to each other, the standard pipe P1 is inserted into the pipe through hole 21 of the first coupling member 2, and the first coupling member 2 is fitted about the standard pipe P1. As shown in Fig. 1(a), the distal portion of the standard pipe P1 is inserted into the first insertion port 16 through the insertion hole 31 of the first ferrule 3 and contacts the step 18. With the distal portion of the standard pipe P1 contacting the step 18, the first coupling member 2 is screwed to the first joint body 1.

When the first coupling member 2 is manually fastened in this state, the front end portion 37 of the first ferrule 3 contacts the first cam surface 19. Since the thin portion is formed above the first notch 35 as described above, the front end portion 37 is easily bent toward the standard pipe P1. Thus, when the first coupling member 2 is manually fastened further, the front end portion 37 of the first ferrule 3 is inserted between the standard pipe P1 and the first insertion port 16 in a wedge-like manner, so that the standard pipe P1 is temporarily fixed.

When the first coupling member 2 is manually fastened further, the above described tapered surface 33 contacts the first cam surface 19, which increases the resistance torque against the fastening motion. Therefore, after this step, the first coupling member 2 is fastened to the first joint body 1 with a general fastening tool engaged with the gripping portion 24. As a result, the first coupling member 2 is fastened with the distal portion of the first ferrule 3 pressed against the first cam surface 19, so that a force acting forward is applied to the thin portion 28. Stress is concentrated at the thin portion 28 in this manner and cuts the thin portion 28.

Thereafter, by fastening the first coupling member 2 further, the outer circumference at the rear end face of the first ferrule 3 is pressed by the first pressing surface 29 with the front end of the first ferrule 3 pressed against the first cam surface 19. When the first coupling member 2 is further fastened, the above described front edge portion and rear edge portion are caused to bite into the standard pipe P1. Accordingly, the rotational torque required for fasten the first coupling member 2 is gradually increased. When the amount of biting into the standard pipe P1 of the front and rear edges reaches a predetermined amount, the position of the rear end face of the internal thread tubular portion 13 and the position of the rear face of the slit 22 are substantially aligned with each other as shown in Figs. 1(b) and 2(a).

In this state, the rotational torque reaches a predetermined value, and the tubular coupling portion 27 is cut. Accordingly, the first gripping portion 24 is cut while being fitted about the standard pipe P1, so that the fastening process of the first coupling member 2 is finished. Therefore, after the fastening process is finished, the first pipe connecting portion 23 cannot be easily loosened and removed from the standard pipe P1.

Hereinafter, a case will be described in which a different-diameter pipe P2 having an outer diameter smaller than that of the standard pipe P1, is connected to the bite type pipe connection structure for connecting a standard pipe.

In this case, the diameter difference adjusting portion is used for connecting the different-diameter pipe P2. As shown in Fig. 1, the diameter difference adjusting portion of the present embodiment is a diameter changing portion 5 located at an end of the different-diameter pipe P2. The outer diameter of the diameter changing portion 5 is increased to match wit the outer diameter d1 of the standard pipe. The length L1 of the diameter changing portion 5 is set to pass through the first coupling member 2 when the fastening of the first coupling member 2 is complete. That is, when the first coupling member 2 is fastened, the diameter changing portion 5 extends through the first gripping portion 24 and extends rearward from the first gripping portion 24 by the proper length. This allows the first ferrule 3 and the first coupling member 2 to be used, and the first gripping portion 24, which has been separated from the first pipe connecting portion 23 when the first coupling member 2 is fastened, to be held on the diameter changing portion 5.

The diameter changing portion 5 allows the different-diameter pipe P2 to be connected in the following manner.

The diameter changing portion 5 is formed by widening the end of the different-diameter pipe P2 such that the outer diameter of the end of the different-diameter pipe P2 matches with the outer diameter d1 of the standard pipe P1. Then, the first coupling member 2 is fitted about the diameter changing portion 5. Thereafter, as in the case of the connection of the standard pipe P1, the first coupling member 2 is fastened so that the first ferrule 3 is tightly held between the first cam surface 19 and the first pressing surface 29, and the diameter changing portion 5 is connected to the first joint body 1. The manner in which the connection takes place is the same as that when the standard pipe P1 is connected (refer to Figs. 1(b) and 2(a)). The rotational torque that acts on the first gripping portion 24 when the fastening of the first coupling member 2 is complete separates the first gripping portion 24 from the first pipe connecting portion 23 and holds the first gripping portion 24 on the diameter changing portion 5 (refer to Fig. 2(b)). The separated first gripping portion 24 is preferably fixed to the diameter changing portion 5 by an appropriate method. For example, the first gripping portion 24 may be bonded to the diameter changing portion 5 with adhesive.

By fixing the first gripping portion 24 to the diameter changing portion 5, noise caused by vibration and movement of the first gripping portion 24 is prevented. For example, if the separated first gripping portion 24 is held on the different-diameter pipe P2, the clearance exists between the pipe through hole 21 of the first gripping portion 24 and the outer circumferential surface of the different-diameter pipe P2. Thus, it is difficult to hold the first gripping portion 24 against vibration and movement. Compared to this, holding the first gripping portion 24 at the diameter changing portion 5 as in the preset embodiment reduces the clearance and allows the first gripping portion 24 to be held easily (refer to Fig. 2(b)).

If the connection of the different-diameter pipe P2 needs to be redone, the different-diameter pipe P2 can be removed using the specialized tool 45.

As shown in Fig. 3, the specialized tool 45 is formed by a semi-circular base body 46 and a handle 47 attached to the base body 46. The base body 46 has a semicircular opening 48 having a center, which is the axis of the base body 46. Three columnar engaging projections 49 are formed on a side of the base body 46. The engaging projections 49 function as engaging portions that are engaged with the engaging holes 41 of the first pipe connecting portion 23. The engaging projections 49 are formed to be engaged with three of the engaging holes 41. The inner diameter of the semicircular opening 48 is slightly greater than the outer diameter of the tubular coupling portion 27.

When the different-diameter pipe P2 is removed, the engaging projections 49 of the specialized tool 45 are engaged with three of the engaging holes 41 of the first pipe connecting portion 23. Then, rotational force is applied to the handle 47 of the specialized tool 45 to rotate the base body 46. This rotates the first pipe connecting portion 23, so that the first pipe connecting portion 23 and the first joint body 1 are unscrewed. By unscrewing the first pipe connecting portion 23 and the first joint body 1, the first pipe connecting portion 23, which is connected to the bite type pipe joint, and the different-diameter pipe P2, which is formed integrally with the diameter changing portion 5, can be removed from the bite type pipe joint. A new different-diameter pipe P2 can be connected to the first joint body 1 using a new first coupling member 2 and a new different-diameter pipe P2 in the manner described above.

The present embodiment described above has the following advantages.
(1) The different-diameter pipe P2 having an outer diameter d2 different from the outer diameter d1 of the standard pipe P1 can be connected, via the different diameter connecting portion, to a bite type pipe connection structure for connecting a standard pipe, which connects the standard pipe P1. Therefore, by preparing a diameter difference adjusting portion that corresponds to the different-diameter pipe P2, a plurality of different-diameter pipes P2 can be connected to an apparatus having the bite type pipe connection structure of the same specifications. This configuration is practical and reduces costs.
(2) The diameter changing portion 5 is formed by widening the end of the different-diameter pipe P2 such that the outer diameter of the end of the different-diameter pipe P2 matches with the outer diameter d1 of the standard pipe P1. This configuration allows the different-diameter pipe P2 having the small outer diameter d2 to be connected to the bite type pipe connection structure, which is installed in the interconnecting device in advance, in the same manner as when the standard pipe P1 is connected.
(3) The first pipe connecting portion 23 and the first gripping portion 24 are integrated. The rotational torque that acts on the first gripping portion 24 when the fastening is complete separates the first gripping portion 24 from the first pipe connecting portion 23. Therefore, after the different-diameter pipe P2 is connected to the pipe joint portion with the diameter changing portion 5 serving as a diameter difference adjusting portion, the connected portion cannot be easily loosened. This effectively prevents leakage.
(4) The diameter changing portion 5 has such a length that the diameter changing portion 5 extends through the first coupling member 2. In this case, after the pipe connection is complete, the separated first gripping portion 24 is held at the diameter changing portion 5 with little clearance. Therefore, the separated first gripping portion 24 can be held on the diameter changing portion 5 with little vibration or movement. This prevents noise from being generated by vibration and movement of the separated first gripping portion 24.
(5) As obvious from the above description, the bite type pipe connection structure according to the present embodiment can be applied to the pipe joint portion of a pipe joint or a valve such as a stop valve. In a freezing apparatus using a pipe joint or a valve that employs this bite type pipe connection structure, the use of the diameter difference adjusting portion allows the different-diameter pipe P2 having the outer diameter d2 different from the outer diameter d1 of the standard pipe P1 to be connected to the bite type pipe connection structure. After the different-diameter pipe P2 is connected to the pipe joint portion in this manner, the pipe joint portion cannot be easily loosened. As a result, inadvertent leakage and discharge of refrigerant gas into the atmosphere are prevented. This reduces the amount of chlorofluorocarbon gas discharged into the atmosphere.
(6) The engaging holes 41 to be engaged with the engaging projections 49 of the specialized tool 45 are formed in the rear surface of the first pipe connecting portion 23.
Therefore, the first pipe connecting portion 23 can be loosened with the specialized tool 45, allowing the connection of the different-diameter pipe P2 to be redone.

The description above relates to a case in which the outer diameter d2 of the different-diameter pipe P2 is smaller than the outer diameter d1 of the standard pipe P1. In a case where the outer diameter d2 of the different-diameter pipe P2 is larger than the outer diameter d1 of the standard pipe P1, the diameter changing portion 5 can be formed by reducing the diameter of the end of the different-diameter pipe P2 such that the reduced diameter matches with that of the standard pipe P1. In this case also, the same configuration as described above provides the same advantages.

### (Second Embodiment)

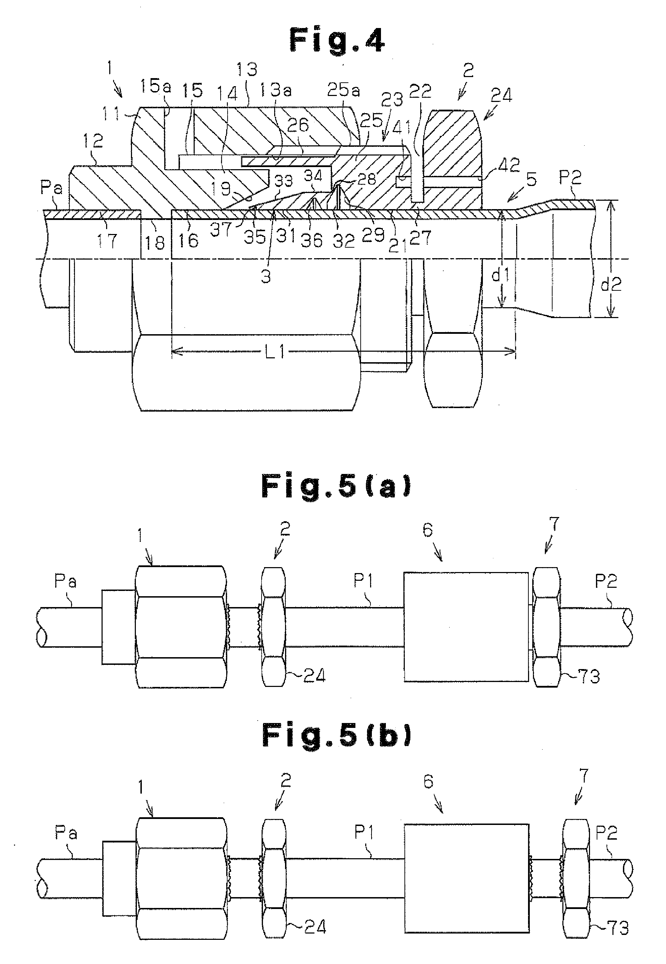

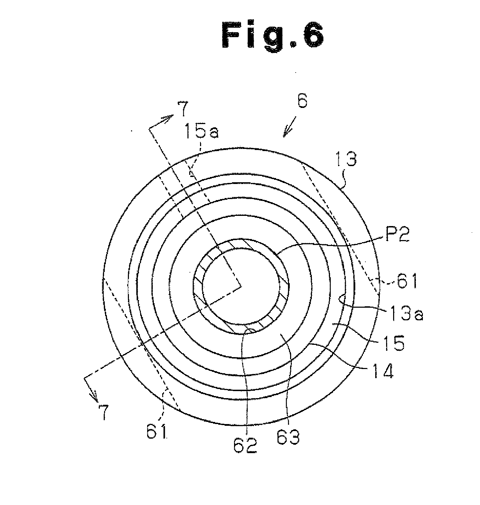

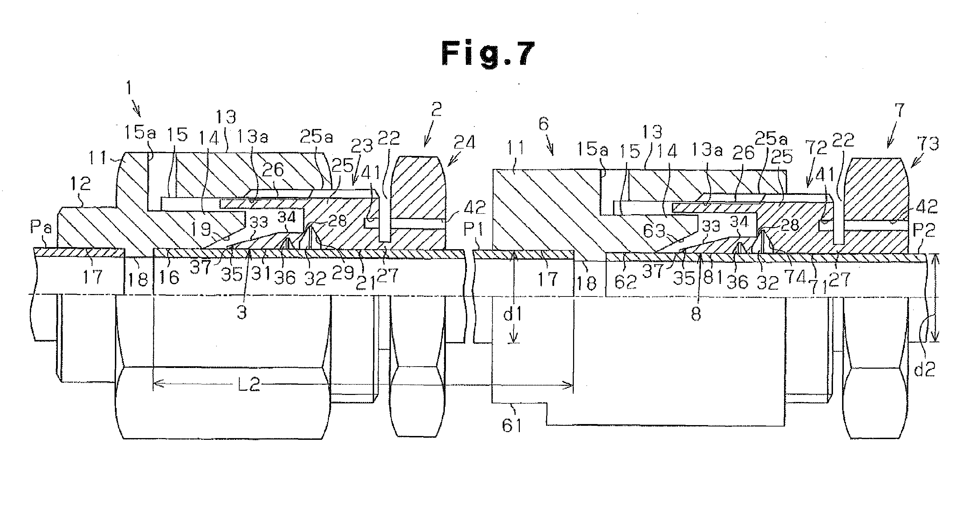

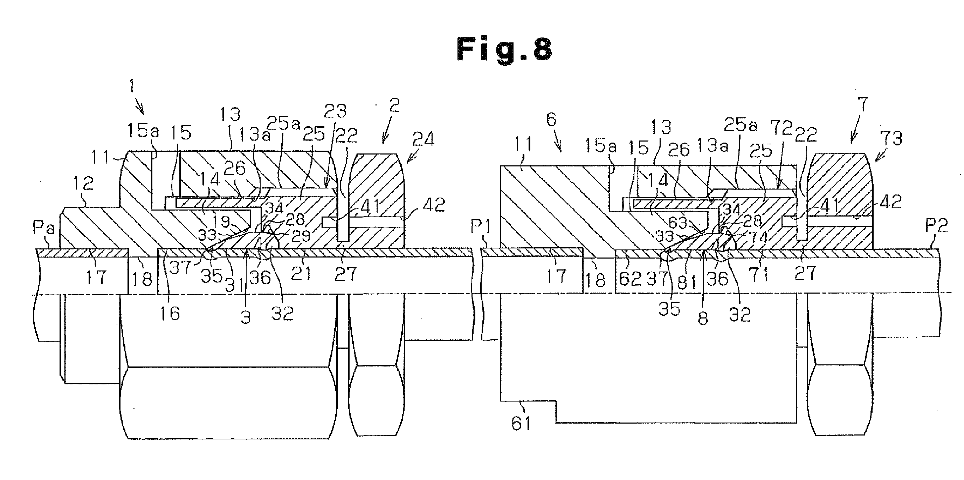

A bite type pipe connection structure according to a second embodiment will now be described with reference to Figs. 5 to 8. According to the second embodiment, a bite type pipe connection structure for connecting a standard pipe is installed in an interconnecting device in advance, and a diameter difference adjusting portion is connected to the bite type pipe connection structure. The diameter difference adjusting portion is formed by a standard pipe P1 having a predetermined length L2 and a bite type pipe joint for connecting a different-diameter pipe. The bite type pipe joint for a different-diameter pipe is connected to the standard pipe P1. Fig. 5 provides plan views of the bite type pipe connection structure according to the second embodiment, in which Fig. 5(a) shows the state of the bite type pipe joint for connecting a different-diameter pipe before being fastened, and Fig. 5(b) shows the state after connection of the different-diameter pipe is complete. Fig. 6 is a side view illustrating a second joint body in the bite type pipe joint for connecting a different-diameter pipe, as viewed from a side at which the different-diameter pipe is connected. Fig. 7 is a partial cross-sectional view taken along line 7-7, showing the state of the bite type pipe joint for connecting a different-diameter pipe before being fastened. Fig. 8 is a partial cross-sectional view taken along line 7-7, showing the state after the fastening of the bite type pipe joint for connecting a different-diameter pipe is complete. In the bite type pipe joint for connecting a standard pipe and the bite type pipe joint for connecting a different-diameter pipe shown in these drawings, the same reference numerals are given to those components that are like or the same as the corresponding components of the bite type pipe joint for connecting a standard pipe according to the first embodiment, and explanations are omitted.

The bite type pipe joint for connecting a standard pipe of the present embodiment is exactly the same as the bite type pipe joint for connecting a standard pipe of the first embodiment.

The standard pipe P1 having the predetermined length L2, which forms the diameter difference adjusting portion of the present embodiment, has the same specifications as the standard pipe P1 of the first embodiment. The proximal portion of the standard pipe P1, which forms the diameter difference adjusting portion in the present embodiment, is connected to the first joint body 1 in the bite type pipe joint for connecting a standard pipe. The distal portion of the standard pipe P1 is brazed to a second joint body 6 of the bite type pipe joint for connecting a different-diameter pipe, which forms the diameter difference adjusting portion (see Figs. 5(a) and 7).

The bite type pipe joint for connecting a different-diameter pipe basically has the same structure and function as those of the bite type pipe joint for connecting a standard pipe, except for some modifications due to a difference in the outer diameter of a pipe to be connected.

As shown in Fig. 7, the bite type pipe joint for connecting a different-diameter pipe includes the second joint body 6, a second coupling member 7 for a different-diameter pipe, and a second ferrule 8 for a different-diameter pipe. The second joint body 6 is brazed to the standard pipe P1. The second coupling member 7 is screwed to the second joint body 6. The second ferrule 8 can be tightly held between the second joint body 6 and the second coupling member 7 and bite in to the different-diameter pipe P2. The outer diameter of the different-diameter pipe P2 in the drawing is the same as the outer diameter d2 of the different-diameter pipe P2 of the first embodiment shown in Fig. 1.

As shown in Fig. 7, a part of the second joint body 6 that corresponds to the socket portion 12 of the first joint body 1 is embedded in the base portion 11. Most of the outer circumference from the base portion 11 to the internal thread tubular portion 13 is formed to be cylindrical, so that it cannot be gripped with common fastening tools such as a spanner and an adjustable wrench. However, if the outer circumference cannot be gripped at all, it can inconvenience specialists. Thus, two parallel surfaces 61, which are opposite to each other, are inconspicuously formed in the front end of the base portion 11 (refer to Figs. 6 and 7). A second insertion port 62 for receiving the different-diameter pipe P2 is formed in the center of the shaft portion 14 projecting into the internal thread tubular portion 13. A second cam surface 63 is formed in a distal portion of the shaft portion 14, that is, at the inlet of the second insertion port 62. The distal portion of the second ferrule is pressed against the second cam surface 63.

The inner diameter of a pipe through hole 71 formed in the second coupling member 7 is substantially the same as the outer diameter of the different-diameter pipe P2. The second coupling member 7 is divided into a second pipe connecting portion 72 and a second gripping portion 73 in the axial direction by the disk-shaped slit 22. The second pipe connecting portion 72 is closer to the second joint body 6 than the second gripping portion 73. The second ferrule 8 is integrated, via a thin portion 28, with a part of the base portion 25 of the second pipe connecting portion 72 that is closer to the second joint body 6. The second ferrule 8 has an edge portion that is tightly held between a second pressing surface 74 and the second cam surface 63 so as to bite into the different-diameter pipe P2. A through hole 81 for receiving the different-diameter pipe P2 is formed in the center of the second ferrule 8. The other structure of the second ferrule 8 is basically the same as the first ferrule 3.

In the bite type pipe connection structure of the present embodiment, the different-diameter pipe P2 is connected to the second joint body 6 connected to a standard pipe in the following manner.

The standard pipe P1 connected to a bite type pipe joint for connecting a standard pipe is cut to have a predetermined length L2. The proximal portion is connected to the first joint body 1. Such connection of the standard pipe P1 is performed in the same manner as the connection of the standard pipe P1 in the first embodiment. In a state where the standard pipe P1 is connected to the first joint body 1, the first gripping portion 24 of the first coupling member 2 is separated from the first pipe connecting portion 23 as described above (refer to the state of the first coupling member 2 in Fig. 5 (a)).

Next, the distal portion of the standard pipe P1 is inserted into the insertion port 17 of the second joint body 6, and brazed and connected to the second joint body 6. The distal portion of the different-diameter pipe P2 is inserted into the pipe through hole 71 of the second coupling member 7, and the second coupling member 7 is fitted about the different-diameter pipe P2. The distal portion of the different-diameter pipe P2 is inserted into the second insertion port 62 through the through hole 81 of the second ferrule 8. As shown in Fig. 7, the second coupling member 7 is screwed to the second joint body 6 with the distal portion of the different-diameter pipe P2 contacting the step 18.

When the second coupling member 7 is manually fastened in this state, the front end portion 37 of the second ferrule 8 contacts the second cam surface 63. Thereafter, the second coupling member 7 is further manually fastened, so that the front end portion 37 of the second ferrule 8 is inserted between the different-diameter pipe P2 and the second insertion port 62 in a wedge-like manner. This temporarily fixes the different-diameter pipe P2. Thereafter, a circular part of the outer circumference of the second joint body 6 is held with a pipe wrench. Alternatively, the parallel surfaces 61 are held with a common fastening tool such as a spanner or an adjustable wrench. The second joint body 6 is held in this manner, and the second coupling member 7 is held and fastened with a common fastening tool.

In the process of fastening the second coupling member 7, the second ferrule 8 is separated from the second coupling member 7 as shown in Fig. 8. The edge portion of the second ferrule 8 bites into the different-diameter pipe P2, so that the fastening of the second coupling member 7 to the second joint body 6 is finished. Then, the rotational torque acting on the second coupling member 7 cuts the tubular coupling portion 27 as shown in Fig. 5(b), so that the second gripping portion 73 is separated from the second pipe connecting portion 72. The separated second gripping portion 73 is fixed on the second different-diameter pipe P2 by an appropriate method.

The description above relates to a case in which the outer diameter d2 of the different-diameter pipe P2 is smaller than the outer diameter d1 of the standard pipe P1. The present embodiment can also be employed in a case where the outer diameter d2 of the different-diameter pipe P2 is larger than the outer diameter d1 of the standard pipe P1. The same structure allows the different-diameter pipe P2 to be connected by performing a process according to the diameter of the pipe.

In addition to the advantages (1) and (5) of the first embodiment, the second embodiment has the following advantages.
(7) To form the diameter difference adjusting portion, it is sufficient to prepare two members, or a standard pipe P1 having the predetermined length L2 and the bite type pipe joint for connecting a different-diameter pipe. Since these members are multipurpose parts, the manufacture costs are reduced, and the parts of the diameter difference adjusting portion are readily available.
(8) Most of the outer circumference of the second joint body 6 is formed to be cylindrical, and the second gripping portion 73 is separated from the second pipe connecting portion 72 when the fastening of the second coupling member 7 is complete. Therefore, after the fastening process is complete, the fastened portion in the bite type pipe joint for a different-diameter pipe cannot be easily loosened. The standard pipe P1 is directly connected to the base portion 11 of the second joint body 6, and the different-diameter pipe P2 is connected to the fastened second pipe connecting portion 72. Thus, even if the second joint body 6 is gripped and rotated with a fastening tool, the connected portion of the standard pipe P1 and the different-diameter pipe P2 is not easily loosened.
(9) After the different-diameter pipe P2 is connected, the outer circumference of the cylindrical second joint body 6 cannot be gripped with a common fastening tool. Therefore, it is difficult to grip the outer circumference of the second joint body 6 with a common fastening tool and loosen the connected portion of the standard pipe P1 and the different-diameter pipe P2. The parallel surfaces 61, which are grippable with a common fastening tool, are inconspicuously formed in a part (in the present embodiment, at an end) of the outer circumference of the second joint body 6. This gives the impression that the second joint body 6 cannot be gripped with a common fastening tool. However, an expert who is well aware of the structure can grip the second joint body 6 at the parallel surfaces 61 with a common fastening tool.
(10) Even in the bite type pipe connection structure for connecting a standard pipe, the first gripping portion 24 is separated from the first pipe connecting portion 23 by rotational torque that acts on the first gripping portion 24 when the fastening of the first coupling member 2 is complete. Therefore, after a different-diameter pipe is connected, the joint portion of the standard pipe P1 cannot be loosened. Thus, coupled with the fact that the connected portion cannot be loosened in the bite type pipe connection structure for connecting a different-diameter pipe, leakage is further effectively prevented.

### (Third Embodiment)

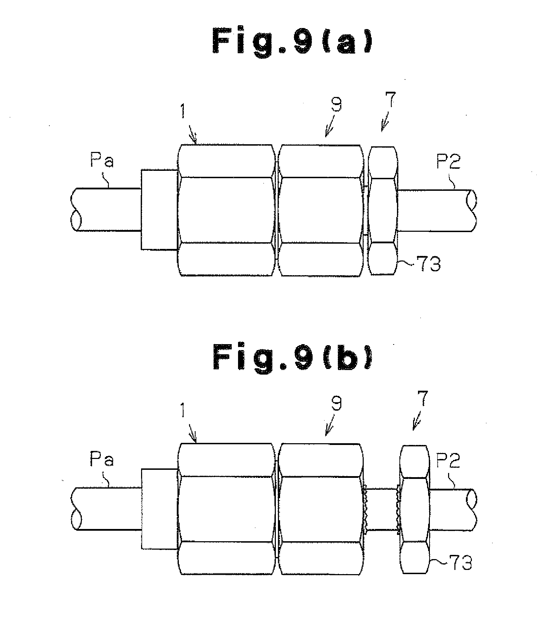

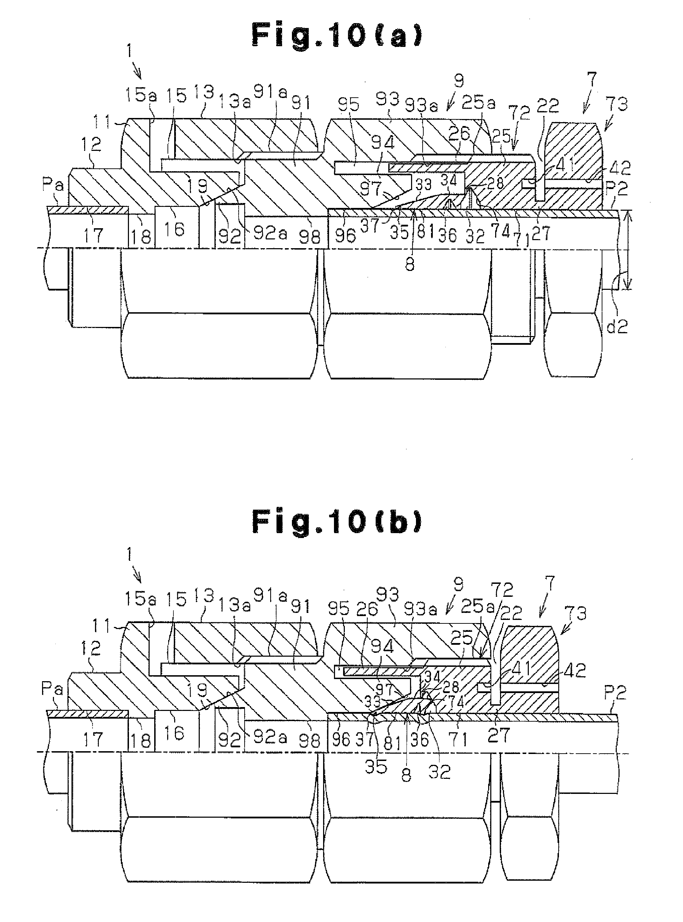

A bite type pipe connection structure according to a third embodiment will now be described with reference to Figs. 9 and 10. In the present embodiment, the first coupling member 2 and the first ferrule 3 are removed from the bite type pipe connection structure for connecting a standard pipe, which structure is installed in an interconnecting device in advance. A diameter difference adjusting portion according to the present embodiment is connected to a first joint body 1 attached to the interconnecting device, and a different-diameter pipe P2 is connected to the diameter difference adjusting portion. Fig. 9 provides plan views of the bite type pipe connection structure according to the third embodiment, in which Fig. 9(a) shows the state when the fastening of the bite type pipe connection structure is complete, and Fig. 9(b) shows the state after the pipe connection is complete. Fig. 10 provides partial cross-sectional views of the bite type pipe connection structure, in which Fig. 10(a) shows the state of the bite type pipe connection structure before being fastened, and Fig. 10(b) shows the state after the fastening of the bite type pipe connection structure is complete. In these drawings, the same reference numerals are given to those components that are like or the same as the corresponding components of the bite type pipe connection structure according to the second embodiment, and explanations are omitted.

A diameter difference adjusting portion according to the third embodiment is formed by an adapter 9 screwed to a first joint body 1, a second coupling member 7 for a different-diameter pipe, and a second ferrule 8 that bites into the different-diameter pipe P2. The second coupling member 7 is screwed to the adapter 9 while being fitted about the different-diameter pipe P2. The second ferrule 8 is tightly held between the adapter 9 and the second coupling member 7.

The first joint body 1 of the present embodiment is the same as the first joint body 1 of the first and second embodiments. The second coupling member 7 and the second ferrule 8 of the present embodiment are the same as the second coupling member 7 and the second ferrule 8 of the second embodiment. That is, in the present embodiment, the adapter 9 is connected to the first coupling member, which is attached to the interconnecting device of the first embodiment, and the different-diameter pipe P2 is connected to the adapter 9 via the second coupling member 7 and the second ferrule 8. Hereinafter, the adapter 9 will be mainly discussed.

The adapter 9 has a substantially columnar base portion 91. A first intermediate thread portion 91a is formed on the outer circumferential surface of the base portion 91. The first intermediate thread portion 91 a is formed by an external thread portion that is screwed to the internal thread portion 13a of the first joint body 1. A projection 92 is formed at a part of the center of the base portion 91 that is close to the first joint body 1. An intermediate tapered surface 92a is formed at the distal portion of the projection 92. The intermediate tapered surface 92a contacts the first cam surface 19. An internal thread tubular portion 93 is formed in a part of the base portion 91 that is close to the second coupling member 7. The internal thread tubular portion 93 is coupled to the outer circumference of the base portion 91 and is formed as a hexagonal nut like the internal thread tubular portion 13 of the first joint body 1. When the adapter 9 is fastened to the first joint body 1, the internal thread tubular portion 93 protrudes from the first joint body 1. A second intermediate thread portion 93a is formed in the inner circumferential surface of the internal thread tubular portion 93. The second intermediate thread portion 93a is formed by an internal thread portion that can be screwed to the external thread portion 25a of the second coupling member 7. A shaft portion 94 is formed inside the internal thread tubular portion 93. The shaft portion 94 projects from the base portion 91 toward the second coupling member 7.

An annular space 95 is formed on the outer circumference of the shaft portion 94. When the second coupling member 7 is fastened, the protective cylinder 26 of the second coupling member 7 is accommodated in the space 95. An intermediate insertion port 96 for receiving the different-diameter pipe P2 is formed in the center of the shaft portion 94. An intermediate cam surface 97 is formed on the distal portion of the shaft portion 94, or at the inlet of the intermediate insertion port 96. The distal portion of the second ferrule 8 is pressed against the intermediate cam surface 97. A front portion of the intermediate cam surface 97 is connected to the intermediate insertion port 96. The intermediate cam surface 97 is formed to be conical with a diameter in the transverse cross section increases toward the rear end (toward the second coupling member 7). A step 98 is formed in a front part of the intermediate insertion port 96. The step 98 contacts the distal portion of the different-diameter pipe P2 to determine the position of the different-diameter pipe P2. The space 95, the intermediate insertion port 96, the intermediate cam surface 97, the second intermediate thread portion 93a correspond to the annular space 15, the second insertion port 62, the second cam surface 63, and the internal thread portion 13a of the second joint body 6 of the second embodiment, respectively.

Using the bite type pipe connection structure according to the present embodiment, the different-diameter pipe P2 is connected in the following manner.

When the first intermediate thread portion 91 a, which functions as an external thread portion, is screwed to the internal thread portion 13a, the adapter 9 is fastened and attached to the first joint body 1, which is attached to the interconnecting device. When the adapter 9 is fastened in this manner, the intermediate tapered surface 92a closely contacts the first cam surface 19, so that the adapter 9 is hermetically attached to the first joint body 1.

The different-diameter pipe P2 is inserted into the pipe through hole 71 of the second coupling member 7, and the second coupling member 7 is fitted about the different-diameter pipe P2. The distal portion of the different-diameter pipe P2 is inserted into the intermediate insertion port 96 through the through hole 81 of the second ferrule 8. Then, with the distal portion contacting the step 98 as shown in Fig. 10(a), the external thread portion 25a of the second coupling member 7 is screwed to the second intermediate thread portion 93a.

When the second coupling member 7 is manually fastened in this state, the front end portion 37 of the second ferrule 8 contacts the intermediate cam surface 97. Thereafter, the second coupling member 7 is further manually fastened, so that the front end portion 37 of the second ferrule 8 is inserted between the different-diameter pipe P2 and the intermediate insertion port 96 in a wedge-like manner. This temporarily fixes the different-diameter pipe P2. Thereafter, the second coupling member 7 is further fastened with a common fastening tool as shown in Fig. 10(b), so that the second ferrule 8 is separated from the second coupling member 7 in the process of fastening the second coupling member 7. The edge portion of the second ferrule 8 bites into the different-diameter pipe P2, so that the fastening of the second coupling member 7 to the adapter 9 is finished. As shown in Fig. 9(b), the rotational torque acting on the second gripping portion 73 when the fastening of the second coupling member 7 is finished cuts the tubular coupling portion 27, so that the second gripping portion 73 is separated from the second pipe connecting portion 72. The separated second gripping portion 73 is fixed on the second different-diameter pipe P2 by an appropriate method.

The description above relates to a case in which the outer diameter d2 of the different-diameter pipe P2 is smaller than the outer diameter d1 of the standard pipe P1. The present embodiment can also be employed in a case where the outer diameter d2 of the different-diameter pipe P2 is larger than the outer diameter d1 of the standard pipe P1. The same structure allows the different-diameter pipe P2 to be connected by performing a process according to the diameter of the pipe.

In addition to the advantages (1) and (5) of the first embodiment, the third embodiment has the following advantages.
(11) The adapter 9 is attached to the first joint body 1. The different-diameter pipe P2 can be connected to the adapter 9 via the second coupling member 7 and the second ferrule 8. Multiple types of different-diameter pipes P2 can be connected to the bite type pipe connection structure by changing the configuration of the adapter 9.
(12) Since the second gripping portion 73 is separated from the second pipe connecting portion 72 after the different-diameter pipe P2 is connected, the connected portion of the different-diameter pipe P2 cannot be easily loosened. After the different-diameter pipe P2 is connected, the second pipe connecting portion 72 is fastened to the adapter 9, and the different-diameter pipe P2 is coupled to the adapter 9 via the second pipe connecting portion 72. Thus, although the outer shape of the adapter 9 is formed like a hexagonal nut, the fastened portion of the first joint body 1 and the adapter 9 is hard to loosen.

### (Fourth Embodiment)

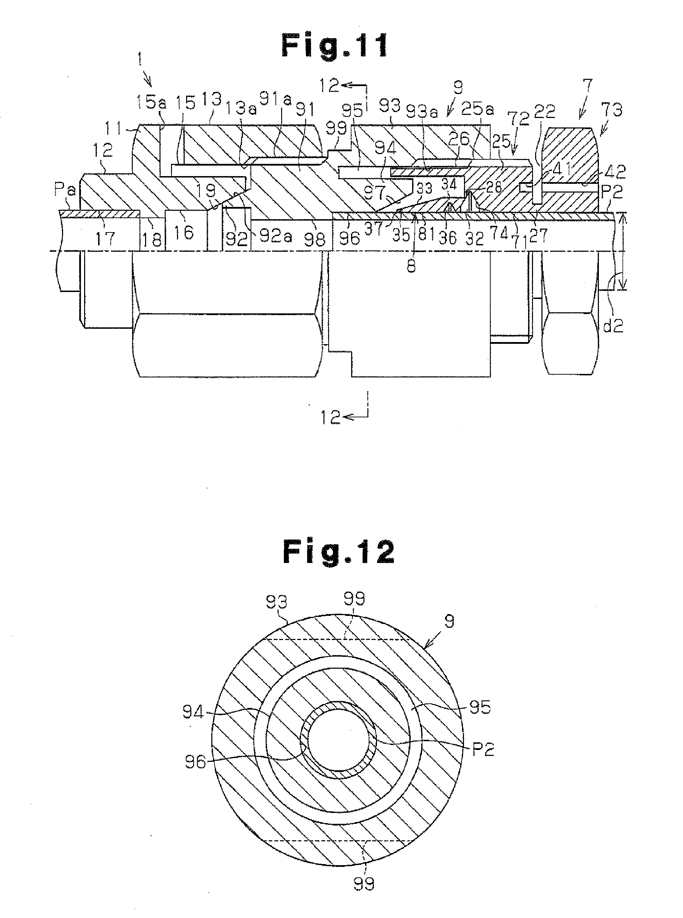

A bite type pipe connection structure according to a fourth embodiment will now be described with reference to Figs. 11 and 12. The present embodiment is equivalent to the third embodiment with the outer shape of the adapter 9 changed. Fig. 11 is a partial cross-sectional view illustrating a state of the bite type pipe connection structure according to the fourth embodiment of the present invention before being fastened, and Fig. 12 is a cross-sectional view taken along line 12-12 of Fig. 11. In these drawings, the same reference numerals are given to those components that are like or the same as the corresponding components of the bite type pipe connection structure according to the third embodiment, and explanations are omitted.

In the adapter 9 of the present embodiment, the outer circumference of the internal thread tubular portion 93 is formed to be cylindrical over the entre length in the axial direction as shown in Figs. 11 and 12. Two parallel surfaces 99, which are opposite to each other, are formed at an end of the outer circumference of the internal thread tubular portion 93. The parallel surfaces 99 are grippable with a common fastening tool. The present embodiment has the same configuration as the third embodiment except for the outer shape of the internal thread tubular portion 93 in the adapter 9.

According to the fourth embodiment, the adapter 9 can be fastened to the first joint body 1 by gripping the circular outer circumference of the adapter 9 with a pipe wrench or by gripping the parallel surfaces 99 with a common fastening tool such as a spanner or an adjustable wrench. When the different-diameter pipe P2 is connected to the bite type pipe connection structure, the second coupling member 7 can be fastened by gripping the adapter 9 in the similar manner and gripping the second gripping portion 73 of the second coupling member 7 with a common fastening tool such as a spanner or an adjustable wrench.

According to the present embodiment, the circular outer circumference of the internal thread tubular portion 93 of the adapter 9 cannot be gripped with a common tool after the different-diameter pipe P2 is connected to the bite type pipe connection structure. Therefore, compared to the third embodiment, the fastened portion of the first joint body 1 and the adapter 9 is harder to loosen. The parallel surfaces 99 are inconspicuously formed in an end of the outer circumference of the internal thread tubular portion 93. This gives the impression that the adapter 9 cannot be gripped with a common fastening tool. However, an expert who is well aware of the structure can grip the adapter 9 at the parallel surfaces 99 with a common fastening tool.

### (Modifications)

(1) In the first and second embodiments, the internal thread portion 13a is provided to allow the first coupling member 2 to be screwed to the first joint body 1. In place of the internal thread portion 13a, an external thread portion may be formed, and a corresponding internal thread portion may be formed in the first coupling member 2. In the second embodiment, the internal thread portion 13a is provided to allow the second coupling member 7 to be screwed to the second joint body 6. In place of the internal thread portion 13a, an external thread portion may be formed, and a corresponding internal thread portion may be formed in the second coupling member 7. In accordance with these changes, the first intermediate thread portion 91a may be changed to an internal thread portion, or the second intermediate thread portion 93a may be changed to an external thread portion in the third embodiment also.
(2) In the above embodiments, the slit 22 is formed in the first coupling member 2 and the second coupling member 7. When fastening of the coupling members 2, 7 is complete, the rotational torque acting on the first and second gripping portions 24, 73 separates the gripping portions 24, 73 from the first and second pipe connecting portions 23, 72. This configuration is not indispensable and the slit 22 may be omitted so that the first and second gripping portions 24, 73 are not separated from the first and second pipe connecting portions 23, 72.
(3) In the first and second embodiment, the first pipe connecting portion 23 and the first griping portion 24 are formed integrally. It is configured such that, when the fastening of the first joint body 1 and the first coupling member 2 is complete, the rotational torque cuts the tubular coupling portion 27. Instead, other configuration in which the first pipe connecting portion 23 and the first gripping portion 24 can be separated may be employed. For example, the first pipe connecting portion 23 and the first gripping portion 24 may be formed separately and then integrated with and fastened to each other by adhering, fitting, or engaging using engaging mechanism such as screws. In this case, when the fastening of the first joint body 1 and the first coupling member 2 is complete, the rotational torque acting on the first gripping portion 24 separates the adhered portions, disengages the engaging mechanism, or destroys the engaging mechanism, so that the first pipe connecting portion 23 and the first gripping portion 24 are separated. The same applies to the relationship between the second pipe connecting portion 72 and the second gripping portion 73 in the second coupling member 7 according to the second and third embodiments.
(4) In the above embodiments, the first and second pipe connecting portions 23, 72 have the engaging holes 41 engageable with a specialized tool. However, these engaging holes 41 may be omitted.
(5) In the second embodiment, the parallel surfaces 61 on the outer circumference of the second joint body 6 may be omitted so that the entire outer circumference of the second joint body 6 is columnar. The entre outer circumference of the second joint body 6 may be shaped like a hexagonal nut. Even if the outer circumference of the second joint body 6 is grippable with a common fastening tool, the second joint body 6 is hard to rotate since the second joint body 6 is coupled to the standard pipe P1 and the different-diameter pipe P2 as described above.
(6) In the fourth embodiment, the parallel surfaces 99 on the outer circumference of the internal thread tubular portion 93 of the adapter 9 so that the entire outer circumference of the internal thread tubular portion 93 is columnar.
(7) In the above embodiments, the pipe connection structure according to the present invention is applied to pipe joints. However, the present invention may be applied to a pipe joint portion in a device such as a valve. Such a pipe connection structure is not limited to the structure of a pipe joint portion of a freezing apparatus, but may be used in water piping or hydraulic piping.
(8) In the above embodiment, the first ferrule 3 is formed integrally with the first coupling member 2, and the second ferrule 8 is formed integrally with the second coupling member 7. However, these ferrules may be formed separately from the coupling members. In such a case, a ferrule may be formed by a single member or multiple members.

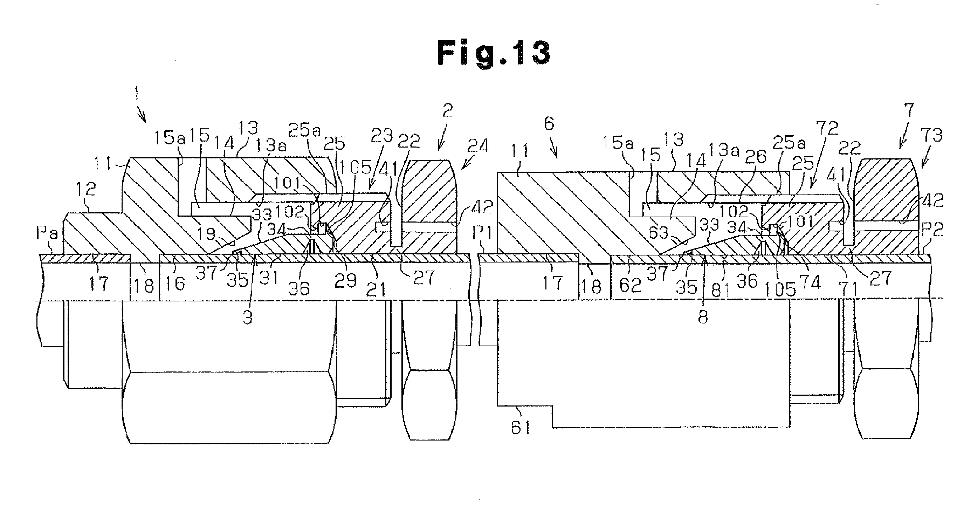

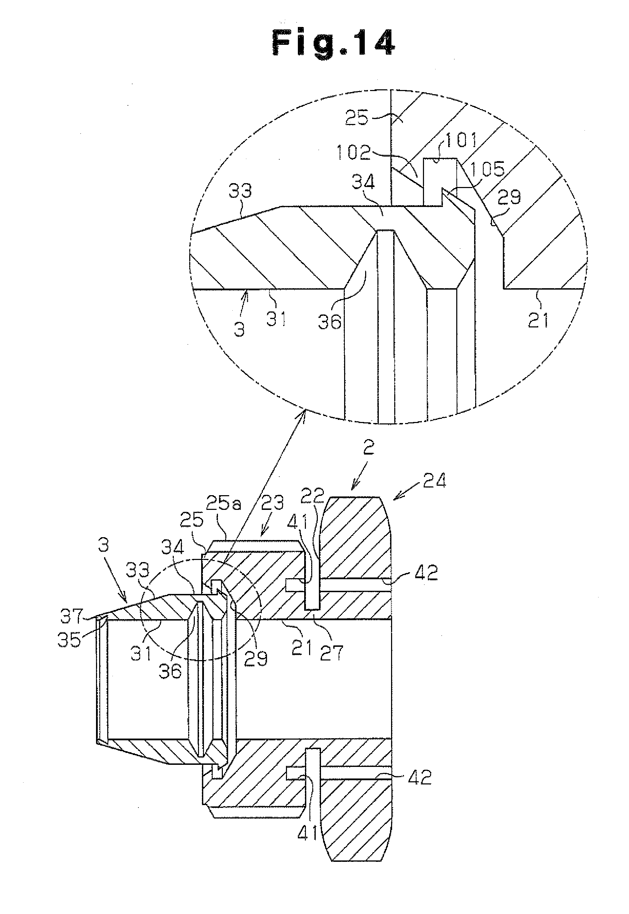

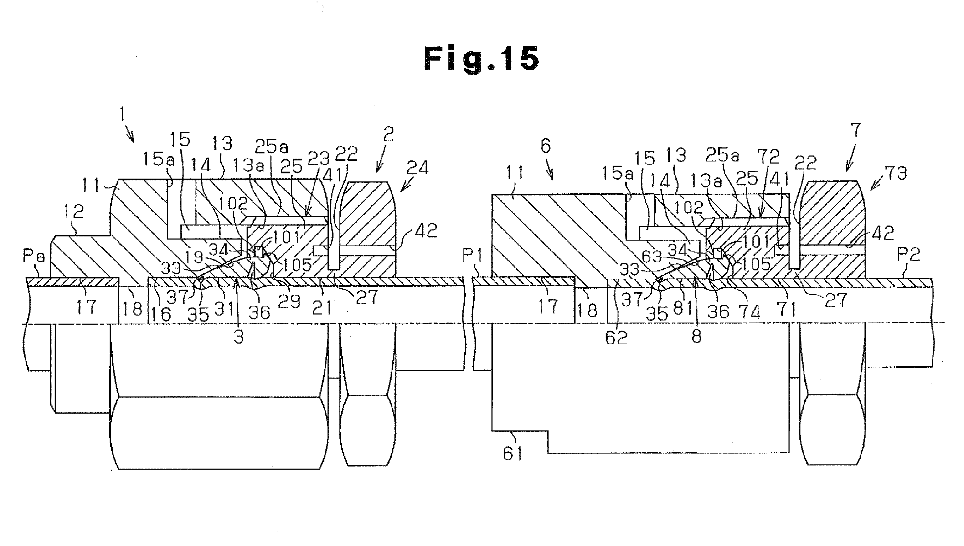

In a case where a ferrule is formed by a single member that is separate from a coupling member, the ferrule may be temporarily attached to and integrated with the coupling member prior to being mounted to other components. This modification will now be described with reference to Figs. 13 to 15. Fig. 13 is a partial cross-sectional view corresponding to Fig. 7 of the second embodiment, and illustrates a bite type pipe connection structure in a state before being fastened. Fig. 14 is a cross-sectional view showing the state in which the first ferrule is temporarily fixed to a first coupling member. Fig. 15 is a partial cross-sectional view illustrating a state of the bite type pipe joint after fastening is complete.

According to this modification, the first ferrule 3 of the bite type pipe joint for connecting a standard pipe of the second embodiment is changed to an independent type that is formed separately from the first coupling member 2. The first ferrule 3 can be temporarily fixed to the first coupling member 2. According to this modification, the second ferrule 8 of the bite type pipe joint for connecting a different-diameter pipe is also changed to an independent type that is formed separately from the second coupling member 7. The second ferrule 8 can be temporarily fixed to the second coupling member 7. The first coupling member 2 and the second coupling member 7 of the present modification have no protective cylinder 26. It is therefore possible to reduce the length in the axial direction of the annular space 15 of the first joint body 1 and the second joint body 6.

The first coupling member 2 and the second coupling member 7 have a mechanism for temporarily fixing the first ferrule 3 and the second ferrule 8 before the coupling members are fastened to the first joint body 1 and the second joint body 6. Taking the first coupling member 2 as an example, a large diameter portion 101, which serves as a temporarily fixing mechanism on the first coupling member, is formed in a position forward of the first pressing surface 29. An annular projection 102 projecting radially inward is formed in a position forward of the large diameter portion 101.

An annular projection 105 is formed at the rear end of the first ferrule 3. The annular projection 105 projects radially outward in the first ferrule 3 and serves as a temporarily fixing mechanism on the first ferrule 3. The outer diameter of the projection 105 is slightly larger than the inner diameter of the projection 102 of the first coupling member 2, and smaller than the inner diameter of the large diameter portion 101. The axial dimension of the projection 105 is smaller than the axial dimension of the large diameter portion 101. The remaining parts of the first ferrule 3 basically have the same structure as that in the second embodiment.

As shown in Fig. 14, the projection 105 at the rear end of the first ferrule 3 press fitted into the large diameter portion 101 by firmly pressing the projection 105 against the projection 102 of the first coupling member 2. Accordingly, the projection 105 is retained in the large diameter portion 101 unless the projection 105 is pulled hard. The first ferrule 3 is thus temporarily fixed to the first coupling member 2.

The first coupling member 2 is fitted about the standard pipe P1 with the first ferrule 3 temporarily fixed, and the coupling member 2 is manually fastened to cause the distal end of the first ferrule 3 to contact the first cam surface 19. When the first coupling member 2 is manually fastened further, the front end portion of the first ferrule 3 is inserted between the standard pipe P1 and the first insertion port 16, so that the standard pipe P1 is temporarily fixed. Thereafter, the coupling member 2 is fastened with a fastening tool in the same manner as the second embodiment (refer to Fig. 15). In the present modification, the position of the vent hole 15a for preventing interior freezing is moved rearward compared to that in the second embodiment, the vent hole 15a has the same effects as in the second embodiment.

So far, a temporary fixing mechanism of the independent type first ferrule in the bite type pipe joint for connecting a standard pipe has been described. The same configuration is applicable to a temporary fixing mechanism of the second ferrule 8 in the bite type pipe joint for connecting a different-diameter pipe. In Figs. 13 and 15, the same reference numerals are given to those components of the temporary fixing mechanism of the second ferrule that correspond to those of the temporary fixing mechanism of the first ferrule 3. Temporary joint of the second ferrule 8 to the second coupling member 7 and fastening of the second coupling member 7 can be performed in the same manner as in the case of the bite type pipe joint for connecting a standard pipe.

Like the second embodiment, the first embodiment may also employ the configuration for temporarily fixing the first coupling member 2, in which the first ferrule 3 is an independent type formed separately from the first coupling member 2. Like the second embodiment, the third embodiment may also employ the configuration for temporarily fixing the second coupling member 7, in which the second ferrule 8 is an independent type formed separately from the second coupling member.

## Claims

1. A bite type pipe connection structure for connecting a standard pipe, comprising a first joint body, a first coupling member, and a first ferrule, the first joint body being attached to an interconnecting device, to which a pipe is connected, the first coupling member being screwed to the first joint body while being fitted about a standard pipe having a predetermined outer diameter of standard specifications, the first ferrule being tightly held between the first joint body and the first coupling member and biting into the standard pipe,
the bite type pipe connection structure being **characterized by** a diameter difference adjusting portion having a first end and a second end, the first end being connected to the first joint body, and the second end being connected to a different-diameter pipe having a diameter different from the outer diameter of the standard pipe, wherein the different-diameter pipe is connected to the first joint body via the diameter difference adjusting portion.

2. The bite type pipe connection structure according to claim 1, **characterized in that** the diameter difference adjusting portion has a diameter changing portion that increases or decreases the outer diameter of the second end of the different diameter pipe so that it matches with the outer diameter of the standard pipe.

3. The bite type pipe connection structure according to claim 2, **characterized in that** the first coupling member includes a first pipe connecting portion screwed to the first joint body and a first gripping portion grippable with a fastening tool,
wherein the first pipe connecting portion is integrated with the first gripping portion, and wherein, when the fastening of the first coupling member is complete, the first gripping portion is separated from the first pipe connecting portion by rotational torque acting on the first gripping portion through the fastening tool.

4. The bite type pipe connection structure according to claim 3, **characterized in that** the diameter changing portion has such a length that the diameter changing portion can pass through the first coupling member in a state where the different-diameter pipe is connected.

5. The bite type pipe connection structure according to claim 1, **characterized in that** the diameter difference adjusting portion includes the standard pipe having a predetermined length and a bite type pipe joint for connecting a different-diameter pipe, the pipe joint being connected to the standard pipe,
wherein the bite type pipe joint for connecting a different-diameter pipe includes a second joint body attached to the standard pipe, a second coupling member for a different-diameter pipe, and a second ferrule for a different-diameter pipe, the second coupling member being screwed to the second joint body while being fitted about the different-diameter pipe, and the second ferrule being tightly held between the second joint body and the second coupling member and biting into the different-diameter pipe.

6. The bite type pipe connection structure according to claim 5, **characterized in that** the second coupling member includes a second pipe connecting portion screwed to the second joint body and a second gripping portion grippable with a fastening tool,
wherein the second pipe connecting portion is integrated with the second gripping portion, and wherein, when the fastening of the second coupling member is complete, the second gripping portion is separated from the second pipe connecting portion by rotational torque acting on the second gripping portion through the fastening tool.

7. The bite type pipe connection structure according to claim 6, **characterized in that** an outer circumference of the second joint body is shaped to be grippable with a fastening tool.

8. The bite type pipe connection structure according to claim 6, **characterized in that** the outer circumference of the second joint body is substantially cylindrical over the entire length in the axial direction.

9. The bite type pipe connection structure according to claim 8, **characterized in that** two parallel surfaces, which are grippable with a fastening tool, are formed in opposite parts of the outer circumference of the second joint body.

10. The bite type pipe connection structure according to claim 6, **characterized in that** the first coupling member includes a first pipe connecting portion screwed to the first joint body and a first gripping portion grippable with a fastening tool,
wherein the first pipe connecting portion is integrated with the first gripping portion, and wherein, when the fastening of the first coupling member is complete, the first gripping portion is separated from the first pipe connecting portion by rotational torque acting on the first gripping portion through the fastening tool.

11. The bite type pipe connection structure according to claim 1, **characterized in that** the diameter difference adjusting portion includes an adapter, a second coupling member for a different-diameter pipe, and a second ferrule, the adapter being screwed to the first joint body, the second coupling member being screwed to the adapter while being fitted about the different-diameter pipe, and the second ferrule being tightly held between the adapter and the second coupling member and biting into the different-diameter pipe,
wherein the first joint body has a first cam surface that contacts the distal end of the first ferrule,
wherein the adapter includes an intermediate tapered surface, a first intermediate thread portion, an intermediate insertion port, an intermediate cam surface, and a second intermediate thread portion, the intermediate tapered surface contacting the first cam surface, the first intermediate thread portion having a thread screwed to the first joint body, the intermediate insertion port receiving a different-diameter pipe, the intermediate cam surface contacting the second ferrule, and the second intermediate thread portion having a thread screwed to the second joint body.

12. The bite type pipe connection structure according to claim 11, **characterized in that** the second coupling member includes a second pipe connecting portion screwed to the adapter and a second gripping portion grippable with a fastening tool,
wherein the second pipe connecting portion is integrated with the second gripping portion, and wherein, when the fastening of the second coupling member is complete, the second gripping portion is separated from the second pipe connecting portion by rotational torque acting on the second gripping portion through the fastening tool.

13. The bite type pipe connection structure according to claim 12, **characterized in that** the adapter includes an internal thread tubular portion, which protrudes from the first joint body when screwed thereto and includes the second intermediate thread portion, wherein the outer circumference of the internal thread tubular portion is shaped to be grippable with a fastening tool.

14. The bite type pipe connection structure according to claim 12, **characterized in that** the adapter includes an internal thread tubular portion, which protrudes from the first joint body when screwed thereto and includes the second intermediate thread portion, wherein the outer circumference of the internal thread tubular portion is substantially cylindrical over the entire length in the axial direction of the internal thread tubular portion.

15. The bite type pipe connection structure according to claim 14, **characterized in that** two parallel surfaces, which are grippable with a fastening tool, are formed in opposite parts of the outer circumference of the internal thread tubular portion.

16. A valve comprising the pipe connection structure according to any one of claims 1 to 15 as a pipe joint portion thereof.

17. A pipe joint comprising the pipe connection structure according to any one of claims 1 to 15 as a pipe joint portion thereof.

18. The freezing apparatus **characterized in that** the valve according to claim 16 is used in a refrigerant circuit thereof.

19. The freezing apparatus **characterized in that** the pipe joint according to claim 17 is used in a refrigerant circuit thereof.
